# FASCICULE DE BREVET EUROPEEN

(11) **EP 3 233 241 B1**
(45) Date de publication et mention de la délivrance du brevet: **24.03.2021**
(21) Numéro de dépôt: 15830799.1
(22) Date de dépôt: 15.12.2015
(51) Int. Cl.: B01D 45/08, B01D 45/16, F01M 13/04

(54) **DISPOSITIF DE SÉPARATION D'HUILE**
VORRICHTUNG ZUM ABSCHEIDEN VON ÖL
DEVICE FOR SEPARARING OIL

(30) Priorité: 19.12.2014 FR 1462989
(43) Date de publication de la demande: 25.10.2017
(73) Titulaire: NOVARES FRANCE, 92140 Clamart (FR)
(72) Inventeur: DEMANGEOT, Jérôme, 62350 Calonne sur La Lys (FR); GAUQUIE, Philippe, 62790 Leforest (FR); MAESEELE, Christophe, 62540 Lozinghem (FR)
(74) Mandataire: Delorme, Nicolas
(86) Numéro de dépôt international: PCT/FR2015/053500
(87) Numéro de publication internationale: WO 2016/097573

(56) Documents cités:
- WO-A1-2010/102687
- DE-A1-102004 037 157
- DE-U1-202012 002 218
- DE-U1-202012 005 909
- GB-A- 888 237
- US-A1- 2009 193 770

## Description

La présente invention concerne un dispositif de séparation d'huile, destiné à séparer des gouttelettes d'huile d'un flux gazeux, en particulier pour un moteur à combustion d'un véhicule automobile.

Dans le fonctionnement d'un moteur à combustion interne, il peut se produire un phénomène de mélange de gouttelettes d'huile dans un flux de gaz.

Ainsi, un moteur comprend classiquement une chambre de combustion dans laquelle est admis un mélange gazeux de combustible et d'air. En fonctionnement, il arrive qu'une partie des gaz de combustion s'infiltre entre le piston et le cylindre dans le carter d'huile du moteur. Ces gaz, appelés gaz de carter, peuvent détériorer le moteur. Il est ainsi connu de les évacuer et de les réutiliser en les recyclant dans le mélange gazeux. Toutefois, les gaz de carter évacués sont chargés de gouttelettes d'huile en suspension collectées dans le carter. Ces gouttelettes d'huile encrassent les éléments du moteur parcourus par les gaz de carter, notamment la ligne d'admission d'air. De plus, ils contribuent à la consommation d'huile. Enfin, compte-tenu des normes antipollution de plus en plus drastiques, il est devenu nécessaire de purifier l'air entrant dans la composition du mélange gazeux en éliminant notamment les gouttelettes d'huile en suspension pour une combustion la meilleure possible.

Il est ainsi connu des documents de brevet EP 1 684 888 ou WO 2010142544 d'éliminer les gouttelettes d'huile transportées par les gaz de carter avec un dispositif de séparation d'huile permettant de décanter les gouttelettes d'huiles. DE 20 2012 002218 U1, DE 10 2004 037157 A1, GB 888 237 A, US 2009/193770 A1 et WO 2005/049176 A1 divulgue autre séparateur d'huile.

Les dispositifs de séparation d'huile connus sont cependant complexes à produire, notamment en raison du nombre important de leurs composants.

Dans ce contexte technique, un but de l'invention est de proposer un dispositif de séparation d'huile qui présente un important pouvoir de captation de gouttelettes d'huile et qui soit d'un cout de production maitrisé.

L'invention concerne un dispositif de séparation d'huile destiné à séparer des gouttelettes d'huile d'un flux gazeux, comprenant une paroi d'admission présentant au moins un orifice d'admission dans lequel est disposée une hélice permettant d'accélérer et d'orienter radialement le flux gazeux et au moins une paroi de rétention présentant au moins un media de rétention disposé en regard d'une hélice.

Ainsi, l'invention fournit un dispositif réalisant une importante captation de gouttelettes d'huile tout en comportant peu de pièces et en étant peu encombrant.

Selon une forme de réalisation préférée de l'invention, la paroi d'admission et la paroi de rétention sont reliées par une charnière permettant à la paroi de rétention d'être rabattue sur la paroi d'admission depuis une configuration dépliée de production vers une configuration repliée d'utilisation.

Cette disposition de l'invention permet une fabrication particulièrement efficace de l'invention car le dispositif dans son ensemble peut être produit par une unique opération de moulage.

La paroi d'admission comprend une paroi cylindrique délimitant un orifice d'admission dans lequel est disposée une hélice, ladite hélice présentant un cône central duquel s'étendent des pales, les pales rejoignant la paroi cylindrique.

Cette caractéristique de l'invention permet de réaliser l'accélération et l'orientation radiale du flux, d'une part, sans pièce mobile et, d'autre part, dans un encombrement réduit.

Le dispositif comprend une paroi intermédiaire interposée entre la paroi d'admission et la paroi de rétention, la paroi intermédiaire présentant des ouvertures destinées à être dans l'alignement d'au moins une hélice pour diriger le flux de gaz vers le média de rétention.

De préférence, la paroi intermédiaire est reliée à la paroi d'admission par une charnière dans un but de simplification des opérations de fabrication.

Selon une possibilité, la paroi de rétention est pleine.

Selon une autre possibilité, la paroi de rétention présente un évidement.

Dans une variante, le panneau de média de rétention est disposé à proximité de la paroi de rétention.

Dans une forme de réalisation de l'invention, la paroi de rétention présente au moins une cage dans laquelle est inséré un média de rétention, ladite cage étant disposée dans l'axe d'une hélice lorsque le dispositif est en configuration repliée d'utilisation.

Selon une possibilité, le média de rétention présente la forme d'un cylindre de média de rétention radiale inséré dans la cage.

Pour sa bonne compréhension, l'invention est décrite en référence aux dessins ci-annexés représentant à titre d'exemples non limitatifs plusieurs formes de réalisation de dispositifs de séparation d'huile selon l'invention.
- La figure 1 représente en perspective une première forme de réalisation d'un dispositif de séparation d'huile avant sa mise en forme
- Les figures 2 et 3 représentent en perspective le dispositif de séparation de la figure 1 en configuration d'utilisation
- La figure 4 représente en perspective une variante de réalisation d'un dispositif de séparation 1 d'huile avant sa mise en forme,
- La figure 5 représente une variante de réalisation d'un dispositif de séparation d'huile en configuration d'utilisation,
- Les figures 6 à 11 montrent en coupe une autre forme de réalisation de l'invention dans plusieurs variantes.

Par convention, les éléments de l'invention qui se retrouvent dans différentes formes de réalisation portent les mêmes références numériques.

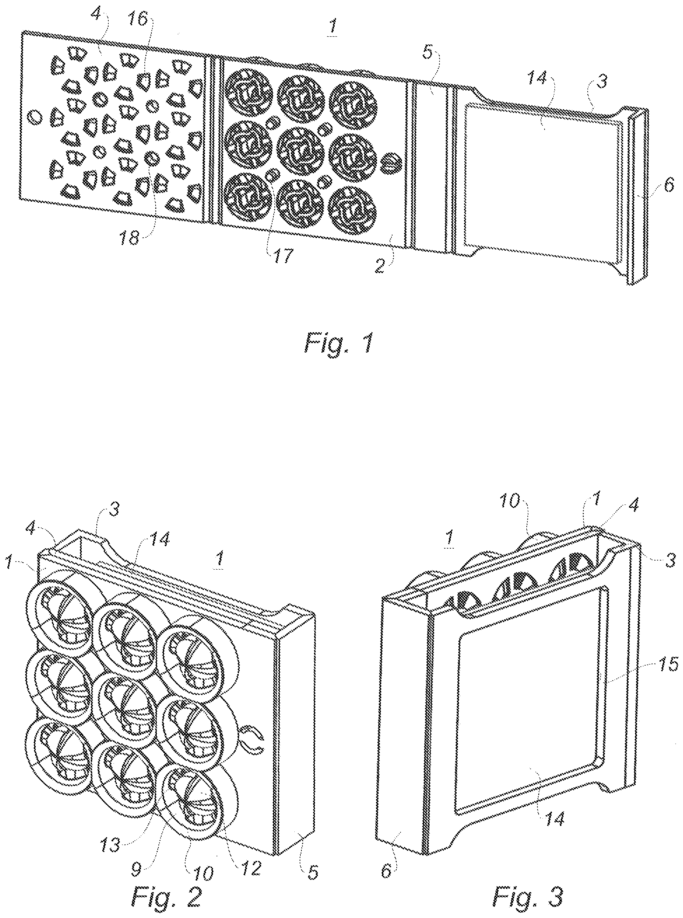

La figure 1 représente dans sa configuration de production dépliée un dispositif de séparation d'huile 1.

Comme on peut le voir sur cette figure, le dispositif de séparation 1 selon l'invention se présente sous la forme d'un élément unitaire en matière plastique et comporte essentiellement trois parties reliées deux à deux.

En pratique, le dispositif de séparation 1 est réalisé en matière plastique moulée et peut être obtenu en une unique opération de moulage.

Au centre du dispositif de séparation 1 se trouve une paroi d'admission 2. De part de d'autre de la paroi d'admission 2, le dispositif de séparation 1 est doté d'une paroi de rétention 3 et d'une paroi intermédiaire 4. Les parois de rétention 3 et intermédiaire 4 sont reliées à la paroi d'admission 2 par des charnières film c'est-à-dire un pont de matière amincie qui permet à la paroi intermédiaire 4 et à la paroi de rétention 3 de pivoter par rapport à la paroi d'admission 2. On note que la paroi de rétention 3 est reliée à la paroi d'admission 2 par une bande de matière 5 elle-même reliée à la paroi de rétention 3 et à la paroi d'admission 2 par des charnières film de matière amincie. Comme on peut le voir sur les figures 1 à 5, la paroi de rétention 3 est de plus pourvue d'un retour de matière 6.

Les caractéristiques de structure et fonctions des différentes parties apparaitront plus loin.

On peut percevoir sur les figures 1 à 5 que la paroi d'admission 2 est pourvue de neuf hélices 8 disposées, dans cette forme de réalisation, en rangées de trois.

Par hélice, on entend au sens du présent document un organe fixe permettant d'accélérer axialement et radialement un flux d'air de gouttelettes d'huile dans le but de centrifuger les particules d'huile et de provoquer leur coalescence.

La paroi d'amission 2 est pourvue d'orifices d'admission 9 délimités par une paroi cylindrique 10 à l'intérieur de laquelle est positionnée une hélice 8. L'hélice 8 présente un cône central 12 duquel s'étendent des pales 13 qui rejoignent la paroi cylindrique 10.

La paroi intermédiaire 4 est pourvue d'ouvertures 16 qui sont disposées dans le prolongement des orifices d'admission 9.

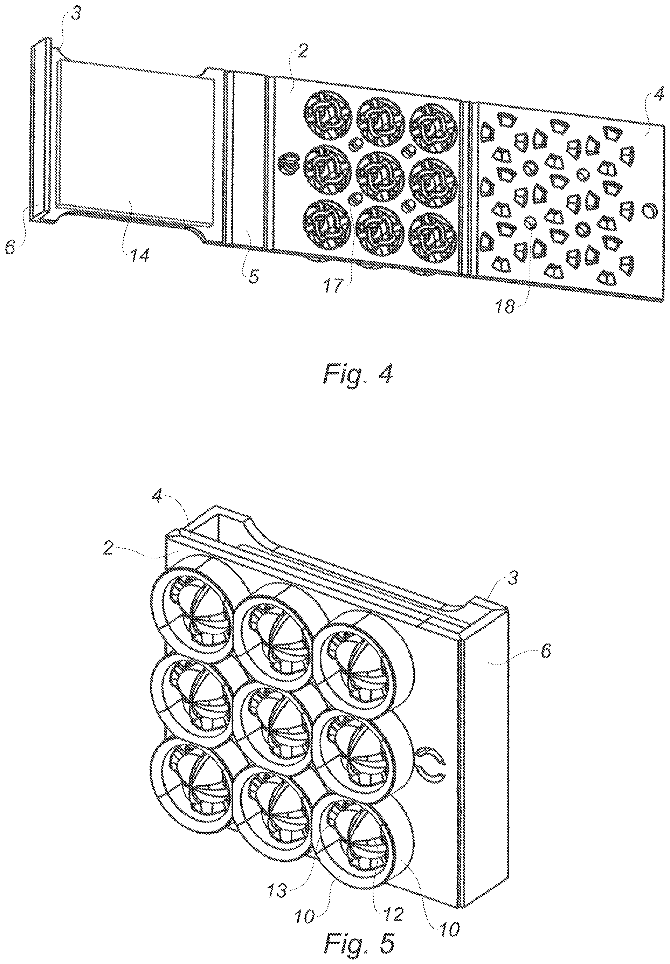

La paroi de rétention 3 se présente sous la forme d'une paroi présentant un évidement 15 (voir figures 1 à 3) ou pleine (voir figures 4 et 5) sur laquelle est disposé un panneau de média de rétention 14. Le média de rétention est, par exemple, un média dit coalescent c'est-à-dire qu'il permet de collecter des gouttelettes d'huile se trouvant en suspension dans un flux d'air. Le média de rétention peut comprendre notamment un matériau poreux à base de fibres.

En pratique, le dispositif de séparation 1 est réalisé par moulage, la paroi d'admission 2, la paroi de rétention 3 et la paroi intermédiaire 4 étant sensiblement dans le prolongement les unes des autres.

Le panneau de média 14 de rétention est rapporté sur la paroi de rétention 3.

Les figures 2 et 3 montrent le dispositif de séparation 1 dans sa configuration repliée d'utilisation. Dans cette configuration, la paroi intermédiaire 4 est rabattue sur la paroi d'admission 2 et la paroi de rétention 3 est rabattue sur la paroi intermédiaire 4. Il est prévu que l'une des parois soit dotée de pions 17 qui s'insèrent dans des perçages 18 ménagés dans une paroi adjacente pour gérer le bon positionnement des parois les unes par rapport aux autres.

On comprend ainsi que le dispositif de séparation 1 est assemblé de manière extrêmement simple. L'assemblage peut être effectué de manière manuelle ou de manière robotisée sans demander d'installation couteuse.

Le dispositif de séparation 1 peut être inséré dans un moteur thermique pour piéger les gouttelettes d'huiles présentes dans un flux d'air comme par exemple dans un flux de gaz de carter.

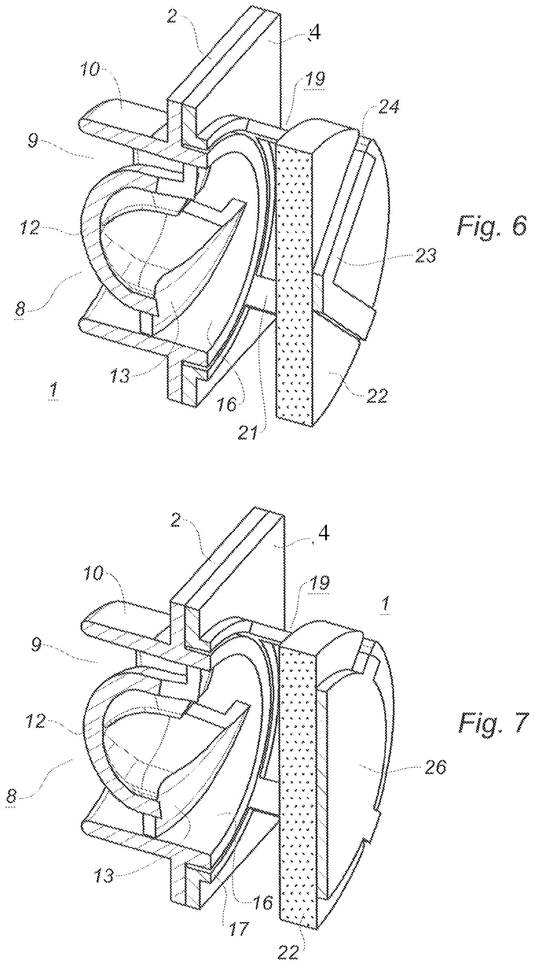

Les figures 6 à 11 montrent de façon partielle une autre forme de réalisation d'un dispositif de séparation 1 avec une paroi d'admission 2 et une paroi de rétention 3.

La paroi d'admission 2 est donc dotée d'une hélice 8.

La paroi d'amission 2 est pourvue d'orifices d'admission 9 délimités par une paroi cylindrique 10 à l'intérieur de laquelle est positionnée une hélice 8. L'hélice 8 présente un cône central 12 duquel s'étendent des pales 13.

La paroi de rétention 3 est rabattue et est plaquée contre la paroi d'admission 2. La paroi de rétention 3 a pour fonction de piéger les gouttelettes d'huile présentes dans le flux gazeux.

La paroi de rétention 3 présente une ouverture 16 éventuellement bordée par une nervure 17 et surmontée par une cage 19. Comme cela va apparaitre, la cage 19 a pour fonction de recevoir un média de rétention. Pour cela, la cage 19 comprend des entretoises 21 qui soutiennent une face postérieure.

Dans les formes de réalisation des figures 6 et 7, le media de rétention se présente sous la forme d'un disque 22 positionné dans un plan normal à l'axe de turbine.

Dans la forme de réalisation de la figure 6, la face postérieure de la cage est constituée par un croisillon 23. Le disque de média de rétention axiale 22 est ainsi bloqué contre le croisillon 23. Le disque de média de rétention axiale 22 peut être doté, à sa périphérie, d'encoches 24 dans lesquelles les entretoises 21 viennent s'engager.

La figure 7 représente une variante du dispositif de séparation 1 illustré à la figure 6 dans laquelle le disque de média de rétention axiale 22 est retenu par un mur 26 qui forme la paroi postérieure de la cage 19. Le mur 19 forme une surface d'appui pour le disque de média de rétention axiale 22.

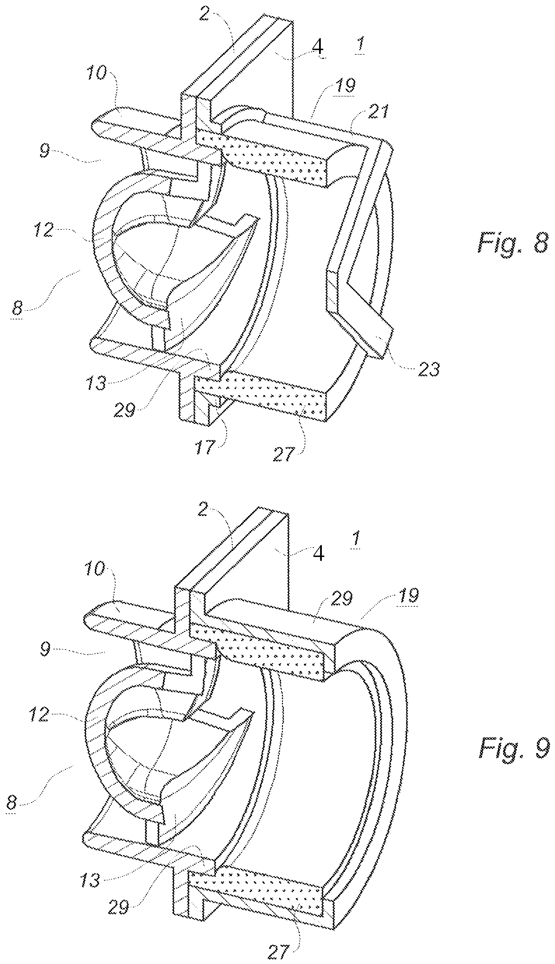

Les figures 8 et 9 illustrent deux variantes dans laquelle le dispositif de séparation 1 est doté d'un media de rétention radial.

Comme cela apparait sur ces figures, le dispositif de séparation 1 est doté d'un cylindre de média de rétention radiale 27. Le cylindre de média de rétention 27 radiale est interposé entre la paroi d'admission 2 et la paroi de rétention 3. En pratique, le cylindre de média de rétention radiale 27 est pincé entre une nervure 29 issue de la paroi d'admission 2 et la nervure 17 de la paroi de rétention 3. Le cylindre de média de rétention radiale 27 présente une hauteur sensiblement égale à celle des entretoises 21 de la paroi intermédiaire 4.

Dans une variante illustrée à la figure 9, le cylindre de média de rétention radiale 27 est encapsulé dans un cylindre de matière plastique 29 qui est issu de la paroi intermédiaire 4. Dans cette variante de réalisation, le cylindre de matière plastique 19 délimite une ouverture postérieure par laquelle s'écoule le flux d'air débarrassé de ses gouttelettes d'huile.

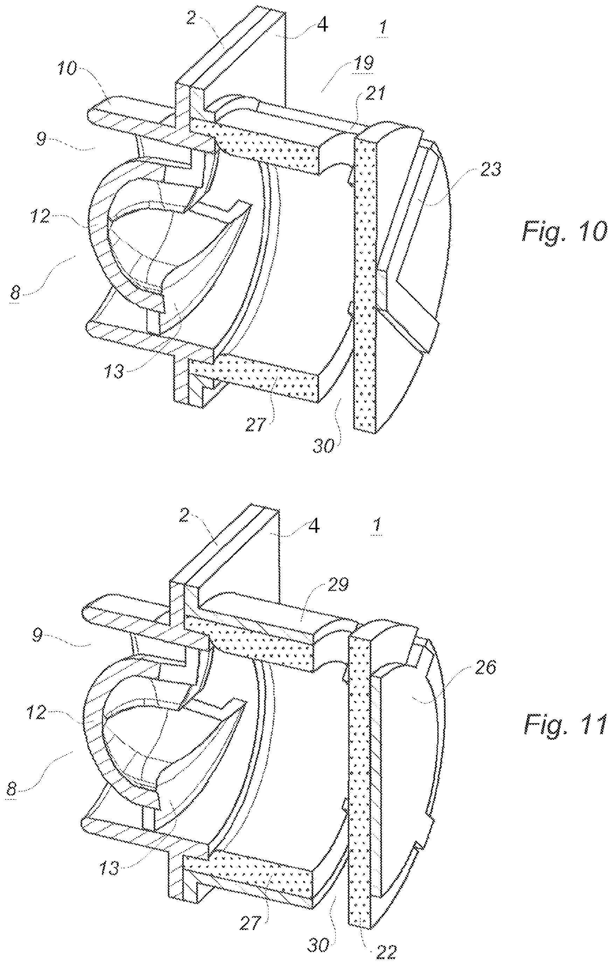

Les figures 10 et 11 représentent deux variantes de réalisation dans lesquelles le dispositif de séparation 1 combine un disque de média de rétention axiale 22 et un cylindre de média de rétention radiale 27.

Comme le montre ces figures, le dispositif de séparation 1 comprend une paroi d'admission 2 dotée d'une hélice 8 permettant d'accélérer et d'orienter radialement le flux d'air chargé de gouttelettes d'huile.

La paroi de rétention 4 est équipée d'un disque de média de rétention axiale 22 et d'un cylindre de média de rétention radiale 27. Le cylindre de média de rétention radiale 27 est pincé entre une nervure issue de la paroi d'admission 2 et une nervure issue de la paroi intermédiaire 4. Le disque de média de rétention axiale 22 est retenu au fond de la cage 19.

La longueur du cylindre de media de rétention radiale 27 est telle qu'un espace 30 est ménagé entre le cylindre de média de rétention radiale 27 et le disque de media de rétention axiale 22. Cet espace 30 permet au flux d'air débarrassé de ses gouttelettes d'huile de s'échapper du dispositif de séparation 1.

Cette forme de réalisation de l'invention réalise une combinaison d'une rétention radiale des gouttelettes d'huile qui sont orientées radialement au sortir de l'hélice 8 et d'une rétention axiale des gouttelettes d'huile qui sont accélérées au sortir de l'hélice.

La figure 11 est une variante du dispositif de séparation 1 de la figure 9 dans laquelle la cage 19 dans laquelle est insérée le media de rétention est pleine et dans laquelle la face postérieure de la cage est également pleine.

L'invention n'est pas limitée aux formes de réalisation décrites ci-dessus à titre d'exemples non limitatifs mais elle en embrasse toutes les formes de réalisation. Ainsi, il est envisagé de réaliser la paroi d'admission, la paroi de rétention et la paroi intermédiaire séparément et de les assembler dans une opération ultérieure.

## Revendications

1. Dispositif de séparation (1) d'huile destiné à séparer des gouttelettes d'huile d'un flux gazeux, **caractérisé en ce que** le dispositif comprenant une paroi d'admission (2) présentant au moins un orifice d'admission (9) dans lequel est disposée une hélice (8) permettant d'accélérer et d'orienter axialement et radialement le flux gazeux et au moins une paroi de rétention (3) présentant au moins un media de rétention (14, 22) disposé axialement en regard de ladite hélice (8), ledit média de rétention (14, 22) étant configuré pour collecter les gouttelettes d'huile présentes dans le flux gazeux, la paroi d'admission (2) comprenant une paroi cylindrique (10) délimitant un orifice d'admission (9) dans lequel est disposée ladite hélice (8), ladite hélice (8) présentant un cône central (12) duquel s'étendent des pales (13), les pales (13) rejoignant la paroi cylindrique (10), **caractérisé en ce que** le dispositif comprend une paroi intermédiaire (4) interposée entre la paroi d'admission (2) et la paroi de rétention (3), la paroi intermédiaire (4) présentant des ouvertures (16) destinées à être dans l'alignement d'au moins ladite hélice (8) pour diriger le flux de gaz vers le média de rétention, ladite paroi intermédiaire (4) étant en outre munie de perçages (18) dans lesquels s'insèrent des pions (17) de la paroi d'admission (2), permettant ainsi un bon positionnement des parois (2, 3, 4) les unes par rapport aux autres.

2. Dispositif de séparation (1) selon la revendication 1, **caractérisé en ce que** la paroi d'admission (2) et la paroi de rétention (3) sont reliées par une charnière permettant à la paroi de rétention (3) d'être rabattue sur la paroi d'admission depuis une configuration dépliée de production vers une configuration repliée d'utilisation.

3. Dispositif de séparation (1) selon l'une des revendications 1 et 2, **caractérisé en ce que** la paroi intermédiaire (4) est reliée à la paroi d'admission (2) par une charnière.

4. Dispositif de séparation (1) selon l'une des revendications 1 à 3, **caractérisé en ce qu'**un panneau de média de rétention est disposé à proximité de la paroi de rétention (3).

5. Dispositif de séparation (1) selon l'une des revendications 2 à 4, **caractérisé en ce que** la paroi de rétention (3) présente au moins une cage (19) dans laquelle est inséré un média de rétention (22), ladite cage (19) étant disposée dans l'axe de ladite hélice (8) lorsque le dispositif est en configuration repliée d'utilisation.

6. Dispositif de séparation (1) selon la revendication 5, **caractérisé en ce que** le média de rétention présente la forme d'un disque de média de rétention axiale (22) supporté par la cage (19).

7. Dispositif de séparation (1) selon la revendication 6, **caractérisé en ce qu'**il comprend en outre un cylindre de média de rétention radiale (27) inséré dans la cage (19).

## Patentansprüche

1. Ölabscheidevorrichtung (1), die dazu bestimmt ist, Öltröpfchen aus einem Gasstrom abzuscheiden, **dadurch gekennzeichnet, dass** die Vorrichtung eine Einlasswand (2) umfasst, die mindestens eine Einlassöffnung (9) aufweist, in der ein Laufrad (8) angeordnet ist, das es ermöglicht, den Gasstrom zu beschleunigen und axial und radial auszurichten, und mindestens eine Rückhaltewand (3), die mindestens ein Rückhaltemedium (14, 22) aufweist, das dem Laufrad (8) axial gegenüberliegend angeordnet ist, wobei das Rückhaltemedium (14, 22) dafür ausgelegt ist, die Öltröpfchen, die im Gasstrom vorhanden sind, zu sammeln, wobei die Einlasswand (2) eine zylindrische Wand (10) umfasst, die eine Einlassöffnung (9) begrenzt, in der das Laufrad (8) angeordnet ist, wobei das Laufrad (8) einen zentralen Kegel (12) aufweist, von dem sich Schaufeln (13) erstrecken, wobei die Schaufeln (13) an die zylindrische Wand (10) heranreichen, **dadurch gekennzeichnet, dass** die Vorrichtung eine Zwischenwand (4) umfasst, die zwischen der Einlasswand (2) und der Rückhaltewand (3) eingefügt ist, wobei die Zwischenwand (4) Öffnungen (16) aufweist, die dazu bestimmt sind, in der Fluchtung mindestens des Laufrads (8) zu liegen, um den Gasstrom zum Rückhaltemedium zu lenken, wobei die Zwischenwand (4) weiter mit Durchbrüchen (18) versehen ist, in die sich Zapfen (17) der Einlasswand (2) einfügen, wodurch sie eine gute Positionierung der Wände (2, 3, 4) zueinander ermöglichen.

2. Abscheidevorrichtung (1) nach Anspruch 1, **dadurch gekennzeichnet, dass** die Einlasswand (2) und die Rückhaltewand (3) über ein Scharnier verbunden sind, das es der Rückhaltewand (3) ermöglicht, aus einer aufgeklappten Produktionsstellung in eine eingeklappte Gebrauchsstellung an die Einlasswand geklappt zu werden.

3. Abscheidevorrichtung (1) nach einem der Ansprüche 1 und 2, **dadurch gekennzeichnet, dass** die Zwischenwand (4) über ein Scharnier mit der Einlasswand (2) verbunden ist.

4. Abscheidevorrichtung (1) nach einem der Ansprüche 1 bis 3, **dadurch gekennzeichnet, dass** in der Nähe der Rückhaltewand (3) eine Rückhaltemedienplatte angeordnet ist.

5. Abscheidevorrichtung (1) nach einem der Ansprüche 2 bis 4, **dadurch gekennzeichnet, dass** die Rückhaltewand (3) mindestens einen Käfig (19) aufweist, in den ein Rückhaltemedium (22) eingesetzt ist, wobei der Käfig (19), wenn sich die Vorrichtung in der eingeklappten Gebrauchsstellung befindet, in der Achse des Laufrads (8) angeordnet ist.

6. Abscheidevorrichtung (1) nach Anspruch 5, **dadurch gekennzeichnet, dass** das Rückhaltemedium die Form einer axialen Rückhaltemedienscheibe (22) aufweist, die vom Käfig (19) getragen wird.

7. Abscheidevorrichtung (1) nach Anspruch 6, **dadurch gekennzeichnet, dass** sie weiter einen radialen Rückhaltemedienzylinder (27) umfasst, der in den Käfig (19) eingesetzt ist.

## Claims

1. An oil separation device (1) intended to separate oil droplets from a gas flow, **characterized in that** the device comprising an inlet wall (2) having at least one inlet orifice (9) in which a helix (8) is disposed allowing accelerating and orienting axially and radially the gas flow and at least one retention wall (3) having at least one retention media (14, 22) disposed axially opposite to said helix (8), said retention media (14, 22) being configured to collect the oil droplets present in the gas flow, the inlet wall (2) comprising a cylindrical wall (10) delimiting an inlet orifice (9) in which said helix (8) is disposed, said helix (8) having a central cone (12) from which blades (13) extend, the blades (13) joining the cylindrical wall (10), **characterized in that** the device comprises an intermediate wall (4) interposed between the inlet wall (2) and the retention wall (3), the intermediate wall (4) having openings (16) intended to be in alignment with at least said helix (8) to direct the gas flow towards the retention media, said intermediate wall (4) being further provided with bores (18) into which pins (17) of the inlet wall (2) are inserted, thus allowing a proper positioning of the walls (2, 3, 4) relative to each other.

2. The separation device (1) according to claim 1, **characterized in that** the inlet wall (2) and the retention wall (3) are connected by a hinge allowing the retention wall (3) to be folded over the inlet wall from an unfolded production configuration to a folded-up use configuration.

3. The separation device (1) according to any of claims 1 and 2, **characterized in that** the intermediate wall (4) is connected to the inlet wall (2) by a hinge.

4. The separation device (1) according to any of claims 1 to 3, **characterized in that** a retention media panel is disposed in the vicinity of the retention wall (3).

5. The separation device (1) according to any of claims 2 to 4, **characterized in that** the retention wall (3) has at least one cage (19) in which a retention media (22) is inserted, said cage (19) being disposed in the axis of said helix (8) when the device is in the folded-up use configuration.

6. The separation device (1) according to claim 5, **characterized in that** the retention media has the shape of an axial retention media disc (22) which is supported by the cage (19).

7. The separation device (1) according to claim 6, **characterized in that** it further comprises a radial retention media cylinder (27) which is inserted into the cage (19).
